# EUROPEAN PATENT APPLICATION

(11) **EP 1 134 944 A2**
(43) Date of publication of application: **19.09.2001**
(21) Application number: 00304637.2
(22) Date of filing: 31.05.2000
(51) Int. Cl.: H04L 12/64

(54) **Communications network, method and protocol for operating the same**

(30) Priority: 17.03.2000 EP 00302185
(71) Applicant: LUCENT TECHNOLOGIES INC., Murray Hill, New Jersey 07974-0636 (US)
(72) Inventor: Costa, Mauro, Chippenham SN5 6PP (GB); Mastromartino, Emiliano Antonio, Swindon SN2 3XT (GB); Salgarelli, Luca, Middletown, New Jersey 07760 (US); Sivagnanasundaram, Sutha, Tooting SW17 4EJ (GB)
(74) Representative: Watts, Christopher Malcolm Kelway, Dr.

(57) **Abstract**

A communications network is configured to operate using real time protocol (RTP) within internet protocol (IP). RTP payloads comprise: a fixed length carried frame bit map defining whether data for each of a plurality N+1 of possible timeslots is present in the payload, and a variable length body containing the data defined as present in the carried user frame bit map.

This allows cheaper transmission of voice frames over IP because N+1 (e.g. 32) voice frames can be multiplexed inside a single RTP packet. This permits an increase in the ratio of user data per packet to packet size so, in turn, increasing bandwidth efficiency.

## Description

This invention relates to a communications network and to a method and protocol for operating a communications network.

Broadly, it is desired to transport streams of voice data using internet protocol (IP): specifically to transport E1 64kbps timeslot data frames using real time protocol (RTP). The conventional proposal for multiple sources multiplexing and transport using the RTP is the IETF RTP multiplexing header. The proposal is bandwidth inefficient for voice streams because the multiplexing header is designed to have more general applicability and is more flexible than necessary for well defined voice streams.

Against this background, there is provided a communications network configured to operate using real time protocol (RTP) within internet protocol (IP), characterised in that the network is further configured so that RTP payloads comprise: a fixed length carried frame bit map defining whether data for each of a plurality N+1 of possible timeslots is present in the payload, and a variable length body containing the data defined as present in the carried bit map.

The invention allows cheaper transmission of voice frames over IP because N+1 (e.g. 32) voice frames can be multiplexed inside a single RTP packet. This permits an increase in the ratio of user data per packet to packet size so, in turn, increasing bandwidth efficiency.

In a preferred example each user frame present contains E1 64 kbps timeslot data and the payload is referred to as "E1 equivalent RTP payload" or E1 ERP.

The carried bit map preferably contains a plurality N+1 of bit positions each corresponding to a respective one of the plurality N+1 of possible timeslots and wherein each bit is set to one value to indicate that the corresponding timeslot data is present in the body and to another value to indicate that the corresponding timeslot data is not present, the timeslot data occurring a predetermined order in the body.

The invention also extends to a method of operating a communications network, comprising using real time protocol (RTP) within internet protocol (IP), characterised in that the RTP payloads comprise: a fixed length carried frame bit map defining whether data for each of a plurality N+1 of possible timeslots is present in the payload, and a variable length body containing the data defined as present in the carried user frame bit map.

The invention further extends to a protocol and to a computer program for carrying out the method.

One embodiment of the invention will now be described, by way of example, with reference to the accompanying drawings, in which:
Figure 1 is a diagrammatic representation of an E1ERP embodying the invention; and
Figure 2 is a diagrammatic representation of part of the protocol stack embodying the invention.

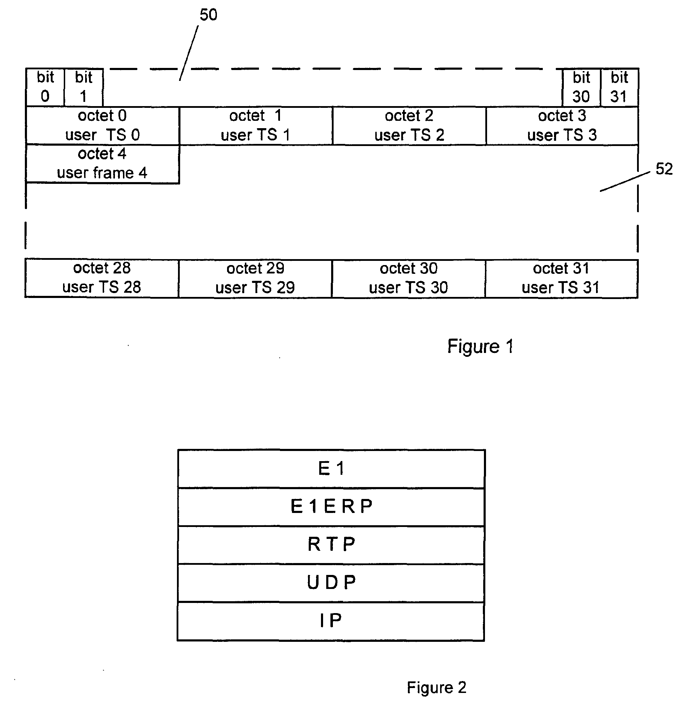

Referring to the drawings, a temporary unidirectional flow of data is established between two RTP endpoints. Each frame contains 8 bits of information that can contain any possible values and can be generated every 125 µs. Up to 32 flows are grouped together inside a multi user set. The flows are synchronous. That is in each frame each flow may contain information or not. Generation of frames at other moments is not permitted. The resulting payload is shown in Figure 1 which shows the case containing a full set of E1 64 kbps timeslots 0 to 31.

As shown in Figure 1, a fixed length frame bit map 50 is carried in the E1 ERP. The carried frame bit map 50 contains 32 bits each corresponding with a respective user timeslots (TS) 0 to 31. The body 52 of the E1 ERP contains data for a variable number of E1 64 kbps timeslots. If the value of the data in a timeslot is zero it is not included in the body 52. The carried frame bit map 50 identifies those timeslots for which data is included and those for which data is not. Thus if a timeslot in a particular frame contains non-zero value data and is thus present, the corresponding bit in the carried frame bit map is set to logical 1. If a timeslot contains zero data in a particular frame, the corresponding bit in the carried frame bit map is set to logical 0 and the data for that timeslot is not transmitted. Thus the body 52 is of variable length depending on how many E1 timeslots contain non-zero data. The order of the timeslot data contained in the body is not disturbed, there are merely omissions from the full set. In reconstructing the 32 timeslot E1 frames, timeslots containing zero value data are inserted in the set in positions corresponding to the positions of logical zero in the carried frame bit map.

The E1 ERP is enclosed in an RTP packet which identifies the multi-user set to which the user frames belong.

## Claims

1. A communications network configured to operate using real time protocol (RTP) within internet protocol (IP), **characterised in that** the network is further configured so that RTP payloads comprise: a fixed length carried frame bit map defining whether data for each of a plurality N+1 of possible time slots frames is present in the payload, and a variable length body containing the data defined as present in the carried bit map.

2. A communications network as claimed in claim 1, wherein each timeslot present contains E1 64 kbps data.

3. A communications network as claimed in claim 1 or 2, wherein the carried bit map contains a plurality N+1 of bit positions each corresponding to a respective one of the plurality N+1 of possible timeslots and wherein each bit is set to one value to indicate that the corresponding timeslot data is present in the body and to another value to indicate that the corresponding timeslot data is not present, the timeslot data occurring a predetermined order in the body.

4. A communications network as claimed in any preceding claim, wherein the plurality N+1 of timeslots possible is 32.

5. A method of operating a communications network, comprising using real time protocol (RTP) within internet protocol (IP), **characterised in that** the RTP payloads comprise: a fixed length carried frame bit map defining whether data for each of a plurality N+1 of possible timeslots is present in the payload, and a variable length body containing the data defined as present in the carried user frame bit map.

6. A method as claimed in claim 5, wherein each user frame contains E1 64 kbps data.

7. A method as claimed in claim 5 or 6, wherein the carried user frame bit map contains a plurality N+1 of bit positions each corresponding to a respective one of the plurality N+1 of possible timeslots and wherein each bit is set to one value to indicate that the corresponding timeslots data is present in the body and to another value to indicate that the corresponding timeslot data is not present, the user frames occurring a predetermined order in the body.

8. A method as claimed in any of claims 5 to 7, wherein the plurality N+1 of timeslots possible is 32.

9. A protocol for carrying out the method of any of claims 5 to 8.

10. A computer program for carrying out the method of any of claims 5 to 8.
